# EUROPEAN PATENT APPLICATION

(11) **EP 4 742 825 A1**
(43) Date of publication of application: **13.05.2026**
(21) Application number: 24838711.0
(22) Date of filing: 05.07.2024
(51) Int. Cl.: H04W 84/06, H04B 7/185

(54) **INFORMATION TRANSMISSION METHOD AND APPARATUS, AND TERMINAL AND NETWORK DEVICE**

(30) Priority: 07.07.2023 CN 202310832362
(71) Applicant: Datang Mobile Communications Equipment Co., Ltd., Beijing 100085 (CN)
(72) Inventor: LI, Yun, Beijing 100085 (CN); ZHAO, Xiaoxue, Beijing 100085 (CN); WAN, Qing, Beijing 100085 (CN); LIU, Xianfeng, Beijing 100085 (CN); LIU, Yingying, Beijing 100085 (CN); WANG, Hucheng, Beijing 100085 (CN)
(74) Representative: dompatent
(86) International application number: PCT/CN2024/103843
(87) International publication number: WO 2025/011458

(57) **Abstract**

The present disclosure provides an information transmission method, apparatus, terminal, and network device, relating to the field of communication technologies. The information transmission method comprises: transmitting first information to a network device; wherein the first information is used to instruct a satellite device to release storage space allocated for the terminal upon satisfaction of a first condition, the first condition comprising completion of forwarding of data of the terminal stored thereon; or, the first information is used to instruct the satellite device to adjust a data storage duration of the terminal and/or adjust data storage capacity allocated by the satellite device for the terminal.

## Description

### CROSS-REFERENCE TO RELATED APPLICATIONS

This application claims priority to Chinese Patent Application No. 202310832362.6, filed with the China National Intellectual Property Administration on July 7, 2023, entitled "Information Transmission Method, Apparatus, Terminal, and Network Device," the entire contents of which are incorporated herein by reference.

### TECHNICAL FIELD

The present disclosure relates to the field of satellite communication technologies, and in particular to an information transmission method, apparatus, terminal, and network device.

### BACKGROUND

In a satellite-based store-and-forward scenario, a satellite storage device allocates storage space of a specific capacity (also referred to as store-and-forward space) for a User Equipment (UE) based on its request for storing data. Typically, this storage space of a specific capacity is valid for a specific period, which is generally the maximum validity period of the storage space serving the UE. When the specific period allocated for the UE expires, the storage space of that specific capacity will be released. It is also important to note that if the satellite storage device cannot allocate storage space for a newly requesting UE, it will affect the provision of storage services for this UE.

In actual operation, when the satellite device re-establishes a link with a ground device to forward data stored in the satellite storage device, or when the uplink connection on the UE side is restored to complete data reception, or when stored data expires and is discarded, the storage space of that specific capacity will be in an idle state with no cached data.

Therefore, how to efficiently utilize the aforementioned storage space of a specific capacity is key to improving storage space utilization, meeting the store-and-forward demands of more UEs, and providing high-quality satellite-based store-and-forward services.

### SUMMARY

Embodiments of the present disclosure provide an information transmission method, apparatus, terminal, and network device, to improve storage space utilization to meet the store-and-forward demands of more UEs and provide high-quality satellite-based store-and-forward services.

To address the above technical problem, an embodiment of the present disclosure provides an information transmission method, performed by a terminal, comprising:
transmitting first information to a network device;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

In some embodiments, the transmitting first information to a network device comprises:
transmitting the first information to the network device via a registration request or a Protocol Data Unit (PDU) session establishment request, the first information being used to instruct the satellite device to release storage space allocated for the terminal upon satisfaction of the first condition.

In some embodiments, the transmitting first information to a network device comprises:
receiving a first message transmitted by the network device, the first message being used to indicate a configuration update reason, or, the first message being used to instruct the terminal to adjust a data storage duration and/or adjust a data storage capacity;
transmitting the first information to the network device according to the first message, the first information being used to instruct the satellite device to adjust the data storage duration of the terminal and/or adjust the data storage capacity allocated for the terminal.

In some embodiments, the transmitting first information to a network device comprises:
if the first message is used to indicate a configuration update reason, transmitting the first information to the network device upon determining, based on the configuration update reason, that adjustment of the data storage duration and/or the data storage capacity is needed.

In some embodiments, the transmitting the first information to the network device comprises:
transmitting the first information to the network device via a registration update request or a PDU session modification request.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the first message comprises: an adjusted data storage duration and/or an adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, the transmitting first information to a network device comprises:
if the first message comprises a configuration parameter update notification message, transmitting the first information to the network device by executing a registration update procedure or a PDU session modification procedure, the first information comprising an adjusted data storage duration and/or an adjusted data storage capacity.

An embodiment of the present disclosure further provides an information transmission method, performed by a network device, comprising:
receiving first information transmitted by a terminal;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

In some embodiments, the method further comprises:
if the first information is used to instruct the satellite device to release storage space allocated for the terminal upon satisfaction of the first condition, determining that the satellite device releases the storage space upon completion of forwarding of the data of the terminal and the storage space being still valid.

In some embodiments, the method further comprises:
transmitting a first message to the terminal, the first message being used to indicate a configuration update reason, or, the first message being used to instruct the terminal to adjust a data storage duration and/or adjust a data storage capacity.

In some embodiments, the transmitting a first message to the terminal comprises:
upon determining that a second condition is satisfied, transmitting the first message to the terminal, the first message carrying the configuration update reason;
wherein the second condition comprises at least one of the following:
   a forwarding time for the data of the terminal stored thereon has timed out;
   a total amount of the data of the terminal stored thereon exceeds an allocated data storage capacity.

In some embodiments, the method further comprises:
adjusting the data storage duration and/or the data storage capacity according to the first information.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the transmitting a first message to the terminal comprises:
receiving first configuration parameters transmitted by a network node, the first configuration parameters comprising at least one of: an adjusted data storage duration of the terminal and/or an adjusted data storage capacity;
transmitting the first message to the terminal according to the first configuration parameters, the first message comprising: the adjusted data storage duration of the terminal and/or the adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, if the first message comprises a configuration parameter update notification message, the first information comprises an adjusted data storage duration of the terminal and/or an adjusted data storage capacity.

An embodiment of the present disclosure further provides a terminal, comprising a memory, a transceiver, and a processor:
the memory is configured to store a computer program; the transceiver is configured to transmit and receive data under control of the processor; the processor is configured to read the computer program in the memory and execute the following operations:
transmitting first information to a network device via the transceiver;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

In some embodiments, the processor is configured to read the computer program in the memory and execute the following operation:
transmitting the first information to the network device via a registration request or a PDU session establishment request, the first information being used to instruct the satellite device to release storage space allocated for the terminal upon satisfaction of the first condition.

In some embodiments, the processor is configured to read the computer program in the memory and execute the following operations:
receiving a first message transmitted by the network device, the first message being used to indicate a configuration update reason, or, the first message being used to instruct the terminal to adjust a data storage duration and/or adjust a data storage capacity;
transmitting the first information to the network device according to the first message, the first information being used to instruct the satellite device to adjust the data storage duration of the terminal and/or adjust the data storage capacity allocated for the terminal.

In some embodiments, the processor is configured to read the computer program in the memory and execute the following operation:
if the first message is used to indicate a configuration update reason, transmitting the first information to the network device upon determining, based on the configuration update reason, that adjustment of the data storage duration and/or the data storage capacity is needed.

In some embodiments, the processor is configured to read the computer program in the memory and execute the following operation:
transmitting the first information to the network device via a registration update request or a PDU session modification request.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the first message comprises: an adjusted data storage duration and/or an adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, the processor is configured to read the computer program in the memory and execute the following operation:
if the first message comprises a configuration parameter update notification message, transmitting the first information to the network device by executing a registration update procedure or a PDU session modification procedure, the first information comprising an adjusted data storage duration and/or an adjusted data storage capacity.

An embodiment of the present disclosure further provides a network device, comprising a memory, a transceiver, and a processor:
the memory is configured to store a computer program; the transceiver is configured to transmit and receive data under control of the processor; the processor is configured to read the computer program in the memory and execute the following operations:
receiving first information transmitted by a terminal via the transceiver;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

In some embodiments, the processor is configured to read the computer program in the memory and further execute the following operation:
if the first information is used to instruct the satellite device to release storage space allocated for the terminal upon satisfaction of the first condition, determining that the satellite device releases the storage space upon completion of forwarding of the data of the terminal and the storage space being still valid.

In some embodiments, the processor is configured to read the computer program in the memory and further execute the following operation:
transmitting a first message to the terminal, the first message being used to indicate a configuration update reason, or, the first message being used to instruct the terminal to adjust a data storage duration and/or adjust a data storage capacity.

In some embodiments, the processor is configured to read the computer program in the memory and execute the following operation:
upon determining that a second condition is satisfied, transmitting the first message to the terminal, the first message carrying the configuration update reason;
wherein the second condition comprises at least one of the following:
   a forwarding time for the data of the terminal stored thereon has timed out;
   a total amount of the data of the terminal stored thereon exceeds an allocated data storage capacity.

In some embodiments, the processor is configured to read the computer program in the memory and further execute the following operation:
adjusting the data storage duration and/or the data storage capacity according to the first information.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the processor is configured to read the computer program in the memory and execute the following operations:
receiving first configuration parameters transmitted by a network node, the first configuration parameters comprising at least one of: an adjusted data storage duration of the terminal and/or an adjusted data storage capacity;
transmitting the first message to the terminal according to the first configuration parameters, the first message comprising: the adjusted data storage duration of the terminal and/or the adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, if the first message comprises a configuration parameter update notification message, the first information comprises an adjusted data storage duration of the terminal and/or an adjusted data storage capacity.

An embodiment of the present disclosure further provides an information transmission apparatus, applied to a terminal, comprising:
a first transmitting unit, configured to transmit first information to a network device;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

An embodiment of the present disclosure further provides an information transmission apparatus, applied to a network device, comprising:
a receiving unit, configured to receive first information transmitted by a terminal;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

An embodiment of the present disclosure further provides a processor-readable storage medium, storing a computer program, the computer program being configured to cause a processor to execute the method described above.

The beneficial effects of the present disclosure are as follows:

In the above solution, by transmitting first information to a network device to instruct a satellite device to release storage space allocated for the terminal upon completion of forwarding of the data of the terminal stored thereon, or to adjust the data storage duration of the terminal and/or the data storage capacity allocated by the satellite device for the terminal, dynamic adjustment of storage space and/or data storage duration is achieved. This can improve the utilization of storage space of the satellite device to meet the store-and-forward demands of more terminals and provide high-quality satellite-based store-and-forward services.

### BRIEF DESCRIPTION OF THE DRAWINGS

In order to more clearly illustrate the technical solutions of the embodiments of the present disclosure or the prior art, the following will briefly introduce the drawings required for describing the embodiments or the prior art. Obviously, the drawings in the following description are only some embodiments of the present disclosure. For those of ordinary skill in the art, other drawings can also be obtained from these drawings without creative effort.
Figure 1 shows a structural diagram of a network system applicable to an embodiment of the present disclosure;
Figure 2 shows a first schematic flowchart of an information transmission method according to an embodiment of the present disclosure;
Figure 3 shows a first schematic diagram of an application architecture according to an embodiment of the present disclosure;
Figure 4 shows a second schematic diagram of an application architecture according to an embodiment of the present disclosure;
Figure 5 shows a schematic flowchart of Application Scenario One according to an embodiment of the present disclosure;
Figure 6 shows a schematic flowchart of Application Scenario Two according to an embodiment of the present disclosure;
Figure 7 shows a schematic flowchart of Application Scenario Three according to an embodiment of the present disclosure;
Figure 8 shows a second schematic flowchart of an information transmission method according to an embodiment of the present disclosure;
Figure 9 shows a first unit schematic diagram of an information transmission apparatus according to an embodiment of the present disclosure;
Figure 10 shows a structural diagram of a terminal according to an embodiment of the present disclosure;
Figure 11 shows a second unit schematic diagram of an information transmission apparatus according to an embodiment of the present disclosure;
Figure 12 shows a structural diagram of a network device according to an embodiment of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are part of the embodiments of the present disclosure, not all of them. All other embodiments obtained by those of ordinary skill in the art based on the embodiments of the present disclosure without creative efforts shall fall within the protection scope of the present disclosure.

The terms "first," "second," etc., in the specification and claims of the present disclosure are used to distinguish similar objects and do not necessarily imply a specific order or sequence. Furthermore, the terms "include," "comprise," and any variations thereof are intended to cover non-exclusive inclusion. For example, a process, method, system, product, or device comprising a series of steps or units is not limited to the steps or units explicitly listed, but may include steps or units not explicitly listed or inherent to the process, method, product, or device.

The term "and/or" in the embodiments of the present disclosure describes association relationships between associated objects, indicating that three relationships may exist. For example, A and/or B may indicate: A alone exists, both A and B exist, or B alone exists. The character "/" generally indicates an "or" relationship between the associated objects. The term "plurality" in the embodiments of the present disclosure means two or more, and other similar terms have analogous meanings.

In the embodiments of the present disclosure, terms such as "exemplary" or "for example" are used to indicate examples, illustrations, or explanations. Any embodiment or design described as "exemplary" or "for example" in the embodiments of the present disclosure should not be construed as preferred or advantageous over other embodiments or designs. Rather, the use of terms such as "exemplary" or "for example" is intended to present related concepts in a concrete manner.

The embodiments of the present disclosure are described below with reference to the accompanying drawings. The information transmission method, apparatus, terminal, and network device provided in the embodiments of the present disclosure may be applied to a wireless communication system. The wireless communication system may be a system using fifth-generation (5G) mobile communication technology (hereinafter referred to as a 5G system for simplicity). Those skilled in the art will understand that the 5G New Radio (5G NR) system is merely an example and not a limitation.

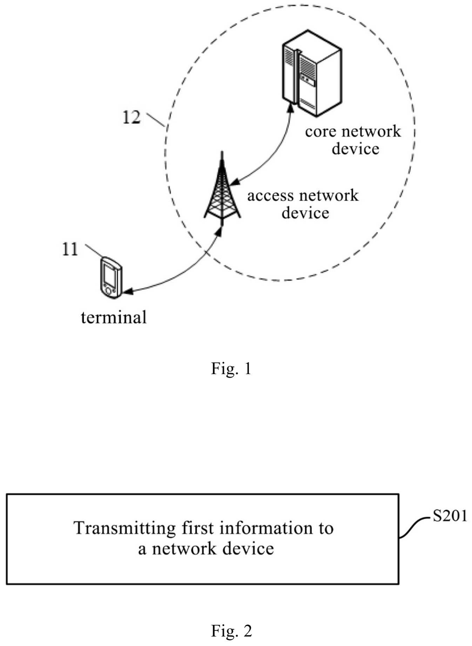

Referring to FIG. 1, FIG. 1 is a structural diagram of a network system applicable to an embodiment of the present disclosure. As shown in FIG. 1, the wireless communication system includes a terminal 11 and a network-side device 12. The terminal 11 may be a mobile phone, a tablet personal computer, a laptop computer, a Personal Digital Assistant (PDA), a palmtop computer, a netbook, an ultra-mobile personal computer (UMPC), a Mobile Internet Device (MID), an Augmented Reality (AR)/Virtual Reality (VR) device, a robot, a wearable device, a Vehicle User Equipment (VUE), a Pedestrian User Equipment (PUE), smart home devices (home devices with wireless communication functions, such as refrigerators, televisions, washing machines, or furniture), a game console, a personal computer (PC), an automated teller machine or self-service machine, a sensing service terminal, various sensors, a smart camera, or other terminal-side devices. Wearable devices include smartwatches, smart bracelets, smart earphones, smart glasses, smart jewelry (smart bracelets, smart bracelets, smart rings, smart necklaces, smart ankle bracelets, smart anklets, etc.), smart wristbands, smart clothing, etc. It should be noted that the specific type of the terminal 11 is not limited in the embodiments of the present disclosure.

The network-side device 12 may include an access network device or a core network device. The access network device may also be referred to as a wireless access network device, a Radio Access Network (RAN), a radio access network function, or a radio access network unit. The access network device may include a base station, a Wireless Local Area Network (WLAN) access point, a Wi-Fi node, or the like. The base station may be referred to as a Node B, an evolved Node B (eNB), an access point, a Base Transceiver Station (BTS), a radio base station, a radio transceiver, a Basic Service Set (BSS), an Extended Service Set (ESS), a Home Node B, a Home evolved Node B, a Transmission Reception Point (TRP), a sensing signal transmission device, a sensing information reception device, or other suitable terms in the relevant field. As long as the same technical effect is achieved, the base station is not limited to specific technical terminology. It should be noted that in the embodiments of the present disclosure, only base stations in NR systems are used as examples for description, and the specific type of base station is not limited. The core network device may include, but is not limited to, at least one of the following: a core network node, a core network function, a Mobility Management Entity (MME), an Access and Mobility Management Function (AMF), a Session Management Function (SMF), a User Plane Function (UPF), a Policy Control Function (PCF), a Policy and Charging Rules Function (PCRF), an Edge Application Server Discovery Function (EASDF), a Unified Data Management (UDM), a Unified Data Repository (UDR), a Home Subscriber Server (HSS), a Centralized Network Configuration (CNC), a Network Repository Function (NRF), a Network Exposure Function (NEF), a Local NEF (L-NEF), a Binding Support Function (BSF), an Application Function (AF), etc.

First, based on the technical solutions provided in the present disclosure, some technical terms that may be involved are introduced.

### 1. Scenario Where Data Needs to be Stored and Forwarded on a Satellite

For some research institutions studying animal behavior, movement trajectories, etc.; for government departments needing to make timely warnings to mitigate or avoid disasters, such as undersea cable monitoring; for Internet of Things (IoT) devices deployed on animals or equipment, due to their geographic location in remote or special areas without communication base stations, data transmission needs to be performed via satellite communication. As they have low latency requirements and ground stations may not be deployed in these areas, data can first be uploaded to and stored on the satellite (which may have a base station or some core network elements onboard). When the satellite can access a ground station, the data is then forwarded.

To support the above-described scenario, base stations or some core network elements need to be deployed on satellites. Data from terminals or ships can be transmitted back to a local ground station via the satellite to the core network, or transmitted back to a distant ground station via inter-satellite links to the core network.

Currently, there is no solution for efficiently utilizing storage space when data transmission of a store-and-forward device is completed but its storage space has not been released, nor is there a solution for reusing the storage-forwarding space that is still within its validity period after the stored data expires.

Based on the analysis, embodiments of the present disclosure provide an information transmission method, apparatus, terminal, and network device, to improve storage space utilization to meet the store-and-forward demands of more UEs and provide high-quality satellite-based store-and-forward services.

The method and apparatus are based on the same inventive concept. Since the principles for solving problems by the method and apparatus are similar, embodiments of the apparatus and method may cross-reference each other, and redundant details are not repeated herein.

As shown in FIG. 2, an embodiment of the present disclosure provides an information transmission method, performed by a terminal, comprising:
Step S201: Transmit first information to a network device;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

It should be noted that the embodiments of the present disclosure enable dynamic adjustment of storage space and/or data storage duration, thereby improving the utilization of storage space of the satellite device to meet the store-and-forward demands of more terminals and provide high-quality satellite-based store-and-forward services.

In some embodiments, the satellite device typically refers to a store-and-forward device (also referred to as an on-satellite store-and-forward device) provided on a satellite. The network device mentioned in the embodiments of the present disclosure may be co-located with the satellite device or may be set up independently.

In some embodiments, the network device in the embodiments of the present disclosure refers to an Access and Mobility Management Function (AMF), or may be a Session Management Function (SMF).

### I. The first information is used to instruct the satellite device to release storage space allocated for the terminal upon satisfaction of a first condition

In some embodiments, in this case, one implementation of the transmitting first information to a network device comprises: transmitting the first information to the network device via a registration request or a Protocol Data Unit (PDU) session establishment request.

It can be understood that the terminal carries the first information in addition to store-and-forward related parameters in the registration request or PDU session establishment request. Furthermore, after receiving the first information, the network device, upon detecting that forwarding of the terminal's data stored on the satellite device is completed and the storage space is not yet invalid, determines that the satellite device releases the storage space. It should be noted here that if the network device is co-located with the satellite device, the network device directly releases the storage space upon detecting completion of the terminal's data forwarding and the storage space being still valid. If the network device is set up independently from the satellite device, the network device, upon detecting that forwarding of the terminal's data on the satellite device is completed and the storage space is still valid, determines that the satellite device releases the storage space, and then transmits a release indication to the satellite device to implement the release of the storage space by the satellite device.

It should be noted that actively releasing the storage space after completion of forwarding of the terminal's data on the satellite device can avoid occupying the storage space and improve the utilization of the satellite device's storage space.

### II. The first information is used to instruct the satellite device to adjust the data storage duration of the terminal and/or adjust the data storage capacity allocated by the satellite device for the terminal

In some embodiments, in this case, one implementation of the transmitting first information to a network device comprises:
receiving a first message transmitted by the network device, the first message being used to indicate a configuration update reason, or, the first message being used to instruct the terminal to adjust a data storage duration and/or adjust a data storage capacity;
transmitting the first information to the network device according to the first message, the first information being used to instruct the satellite device to adjust the data storage duration of the terminal and/or adjust the data storage capacity allocated for the terminal.

It should be noted that this scenario enables adjustment of data storage duration and/or data storage capacity, and this adjustment is triggered by the network device side.

The specific implementations of the present disclosure are described below with examples under different indications of the first message.
1. The first message is used to indicate a configuration update reason

In some embodiments, the configuration update reason comprises at least one of the following:
A11. The forwarding time for the data of the terminal stored thereon has expired;
A12. The total amount of the data of the terminal stored thereon exceeds the allocated data storage capacity.

It should be noted that this case can be understood as the network device actively triggering adjustment of data storage duration and/or data storage capacity based on its own detection. In some embodiments, the network device transmits the first message to the terminal, the first message carrying the configuration update reason, upon determining that a second condition is satisfied;
wherein the second condition comprises at least one of the following:
A21. The forwarding time for the data of the terminal stored thereon has timed out;
A22. The total amount of the data of the terminal stored thereon exceeds the allocated data storage capacity.

It can be understood that the network device performs real-time detection. As long as it detects that the forwarding time for the terminal's data stored on the satellite device has timed out and/or the total amount of the terminal's data exceeds the allocated data storage capacity, it triggers transmission of the first message to the terminal.

In some embodiments, after receiving the first message, the terminal transmits the first information to the network device upon determining, based on the configuration update reason, that adjustment of the data storage duration and/or the data storage capacity is needed.

It should be noted that this case can be understood as the terminal deciding whether it needs to extend the data storage duration and/or adjust the data storage capacity after obtaining the configuration update reason. If it determines that extending the data storage duration and/or adjusting the data storage capacity is needed, it then transmits the first information to the network device.

In some embodiments, the transmitting the first information to the network device comprises:
transmitting the first information to the network device via a registration update request or a PDU session modification request.

In some embodiments, to facilitate the network device to determine the extended data storage duration and/or the adjusted data storage capacity, in one implementation, the first message comprises: an adjusted data storage duration and/or an adjusted data storage capacity.

It should be noted that this implementation involves the network device actively triggering adjustment of data storage duration and/or data storage capacity based on its own detection, thereby improving the utilization of storage space of the satellite device to meet the store-and-forward demands of more terminals and provide high-quality satellite-based store-and-forward services.

2. The first message is used to instruct the terminal to adjust a data storage duration and/or adjust a data storage capacity
It should be noted that this case can be understood as the network device triggering adjustment of data storage duration and/or data storage capacity based on adjustment requirements from a third party. In some embodiments, the network device receives first configuration parameters transmitted by a network node, the first configuration parameters comprising at least one of: an adjusted data storage duration of the terminal and/or an adjusted data storage capacity;
transmits the first message to the terminal according to the first configuration parameters, the first message comprising: the adjusted data storage duration of the terminal and/or the adjusted data storage capacity.

In some embodiments, the network node may be a Network Exposure Function (NEF), a third-party Application Function (AF), Operations and Maintenance (OAM), a Network Data Analytics Function (NWDAF), or the like.

**In** some embodiments, the first message comprises at least one of the following messages:
A31. A configuration parameter adjustment notification message;
   **In** some embodiments, in this case, after obtaining the adjusted data storage duration and/or adjusted data storage capacity, the network device actively adjusts the data storage duration and/or data storage capacity of the satellite device. It only needs to send a notification to the terminal via the configuration parameter adjustment notification message indicating that the data storage duration and/or data storage capacity have been adjusted.
A32. A configuration parameter update notification message, the configuration parameter update notification message being used to instruct the terminal to execute a configuration parameter update procedure;
   In some embodiments, in this case, after obtaining the adjusted data storage duration and/or adjusted data storage capacity, if the network device cannot actively adjust the data storage duration and/or data storage capacity, i.e., adjustment needs to be triggered based on the terminal's initiative, then the network device transmits a configuration parameter update notification message to the terminal. The terminal needs to transmit the first information to the network device by executing a registration update procedure or a PDU session modification procedure, the first information comprising the adjusted data storage duration and/or the adjusted data storage capacity. Furthermore, after obtaining the first information transmitted by the terminal, the network device needs to adjust the data storage duration and/or the data storage capacity according to the first information.

It should be noted that this implementation involves the network device triggering adjustment of data storage duration and/or data storage capacity based on instructions from a third party, thereby improving the utilization of storage space of the satellite device to meet the store-and-forward demands of more terminals and provide high-quality satellite-based store-and-forward services.

It should be noted that the application architectures of the embodiments of the present disclosure mainly include the following two types:

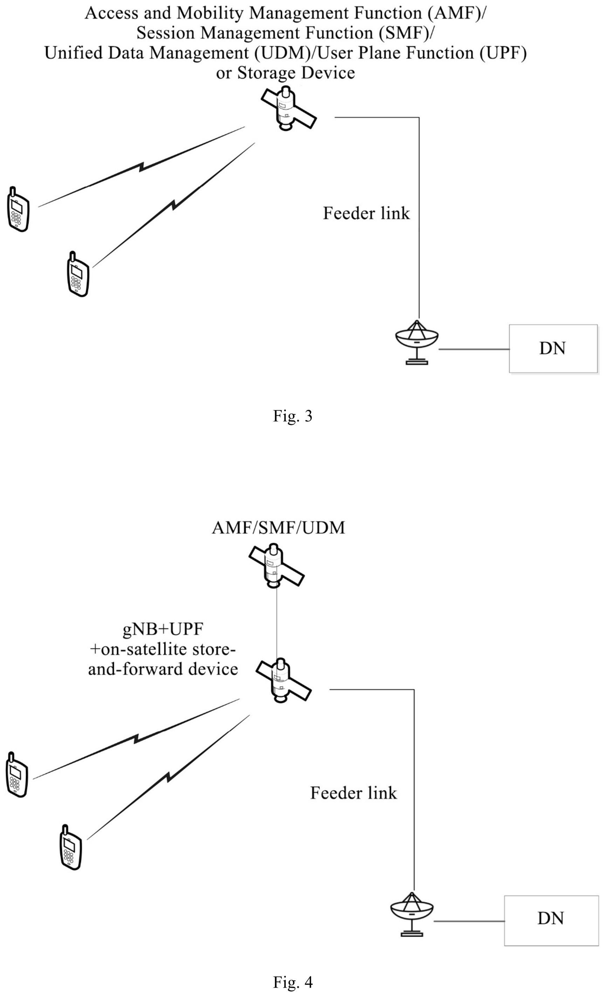

Application Architecture I: As shown in FIG. 3, a lightweight 5G Core (5GC) and an access network (e.g., a base station) are deployed on the same satellite; the 5GC may include at least one of the following: AMF, SMF, Unified Data Management (UDM), User Plane Function (UPF).

Application Architecture II: As shown in FIG. 4, a low earth orbit satellite deploys an access network and a UPF, while a geostationary orbit satellite deploys a lightweight 5GC (e.g., including at least one of the following: AMF, SMF, UDM).

It should be noted that in both application architectures, the UDM stores user subscription information. The terminal's data can be stored in other 5G core network functions, such as the UPF, or in an additional storage device co-located with it.

The specific application processes of the embodiments of the present disclosure are illustrated below with examples.

### Application Scenario I: Store-and-forward device co-located with AMF, terminal adds first information during registration process

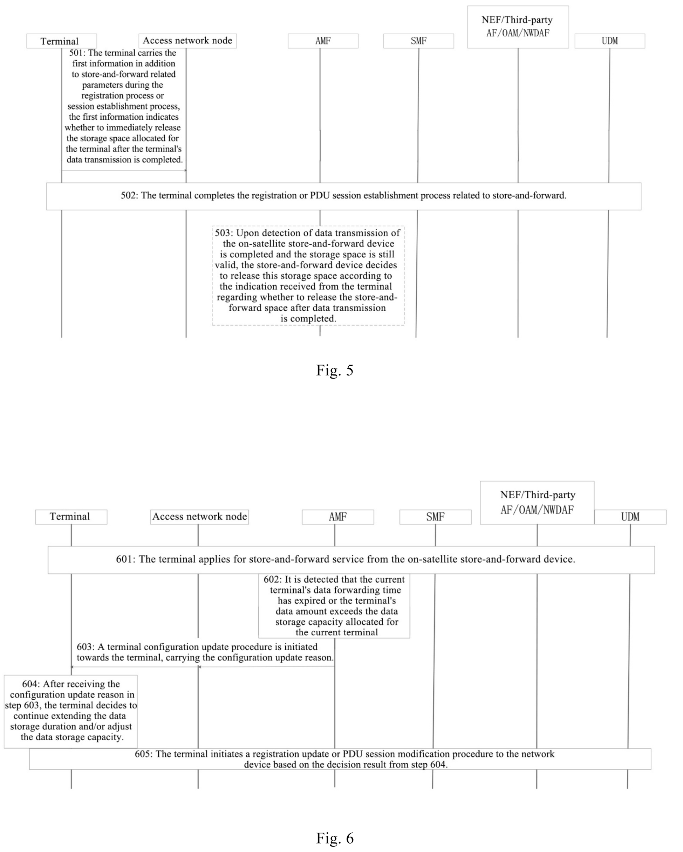

As shown in FIG. 5, the specific implementation process includes:
Step 501: The terminal carries the first information in addition to store-and-forward related parameters during the registration process or session establishment process, the first information being used to indicate whether to immediately release the storage space allocated for the terminal after the terminal's data transmission is completed.
Step 502: The terminal completes the registration or PDU session establishment process related to store-and-forward.

Step 503: The store-and-forward device (or AMF/SMF monitoring it) detects that data transmission of the on-satellite store-and-forward device is completed and the storage space is still valid (i.e., the validity period of the storage space allocated for this terminal has not expired). According to the indication received from the terminal regarding whether to release the store-and-forward space after data transmission is completed, it decides to release this storage space.

In some embodiments, this decision may be made by the AMF; or, if the store-and-forward service is applied for by the terminal through the PDU session process, this decision is made by the SMF and forwarded to the AMF for transmission/notification to the terminal.

### Application Scenario II: Store-and-forward device co-located with AMF, network side detects data forwarding time has expired and/or terminal's data amount exceeds allocated storage capacity, initiates configuration update

As shown in FIG. 6, the specific implementation process includes:
Step 601: The terminal applies for store-and-forward service from the on-satellite store-and-forward device (registration process or PDU session establishment process).
Step 602: It is detected that the current terminal's data forwarding time has expired or the terminal's data amount exceeds the data storage capacity already allocated for the current terminal.

It should be noted that this detection can be performed by the AMF, or if the on-satellite store-and-forward device is a UPF (i.e., the terminal applies for the store-and-forward service through the PDU session process), the SMF performs the above detection and forwards it to the AMF for transmission to the terminal.

Step 603: A terminal configuration update procedure is initiated towards the terminal, carrying the configuration update reason (e.g., the forwarding time for the data of the terminal stored thereon has expired and/or the total amount of the data of the terminal stored thereon exceeds the data storage capacity already allocated for the current terminal).

Step 604: After receiving the configuration update reason from step 603, the terminal decides to continue extending the data storage duration and/or adjust the data storage capacity.

Step 605: The terminal initiates a registration update or PDU session modification procedure to the network device based on the decision result from step 604.

### Application Scenario III: Store-and-forward device co-located with AMF, AF-triggered terminal configuration update

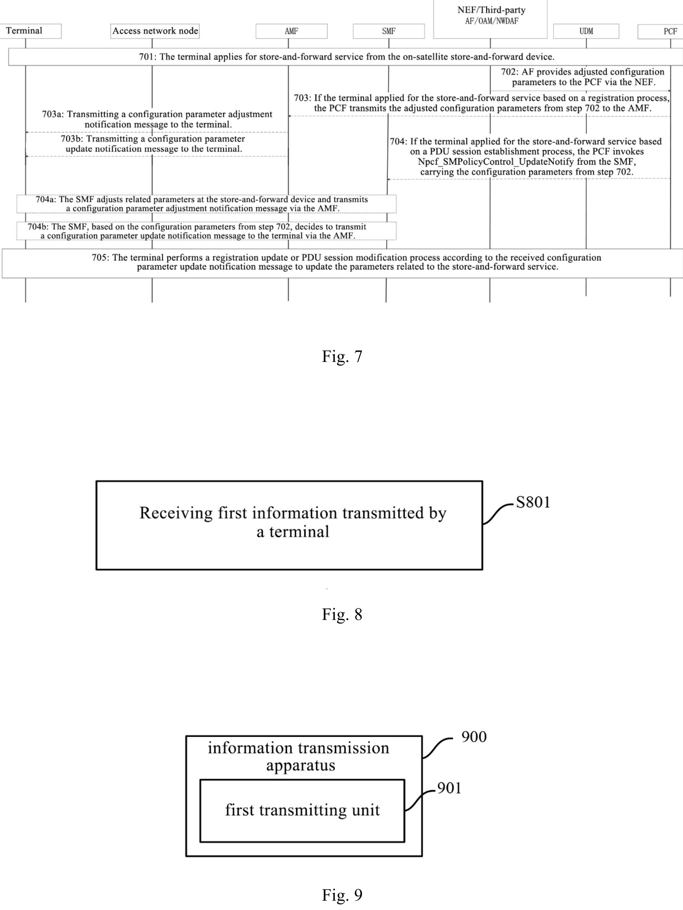

As shown in FIG. 7, the specific implementation process includes:
Step 701: The terminal applies for store-and-forward service from the on-satellite store-and-forward device.

Step 702: The AF provides adjusted configuration parameters, e.g., adjusted data storage capacity and/or data storage duration for the current terminal or session, to the Policy Control Function (PCF) via the NEF.

Step 703: If the terminal applied for the store-and-forward service based on a registration process, the PCF transmits the adjusted configuration parameters from step 702 to the AMF.

After executing step 703, the on-satellite store-and-forward device (or the network device managing it) can perform one of the following operations:
Step 703a: Actively adjust the store-and-forward parameters for the current terminal/session, and send a configuration parameter adjustment notification message to the terminal.
Step 703b: Send a configuration parameter update notification message to the terminal, prompting the terminal to actively initiate a registration update or PDU session modification procedure.

It should be noted that only one of step 703a and step 703b is executed.
Step 704: If the terminal applied for the store-and-forward service based on a PDU session establishment process, the PCF invokes Npcf_SMPolicyControl_UpdateNotify from the SMF, carrying the configuration parameters from step 702;
Step 704a: The SMF adjusts related parameters at the store-and-forward device and transmits a configuration parameter adjustment notification message via the AMF;
Step 704b: The SMF, based on the configuration parameters from step 702, decides to send a configuration parameter update notification message to the terminal via the AMF;
After the terminal receives this configuration parameter update notification message, it initiates a PDU session modification to modify/adjust the parameters of the store-and-forward device.

It should be noted that only one of step 704a and step 704b is executed. That is, after step 704 is executed, one of step 704a or step 704b is subsequently executed.

It should be noted that only one of step 703 and step 704 is executed.

Step 705: The terminal performs a registration update or PDU session modification process according to the received configuration parameter update notification message to update the parameters related to the store-and-forward service.
It should be noted that step 705 is an optional step. The terminal executes step 705 only if it receives a configuration parameter update notification message.

In summary, it can be seen that the embodiments of the present disclosure improve the usage efficiency of the storage space of the on-satellite store-and-forward device, allowing the store-and-forward space to be utilized to the greatest extent to provide on-satellite store-and-forward services for terminals.

The technical solutions provided in the embodiments of the present disclosure can be applied to various systems, especially 5G systems. For example, applicable systems may be Global System for Mobile Communications (GSM) systems, Code Division Multiple Access (CDMA) systems, Wideband Code Division Multiple Access (WCDMA) systems, General Packet Radio Service (GPRS) systems, Long Term Evolution (LTE) systems, LTE Frequency Division Duplex (FDD) systems, LTE Time Division Duplex (TDD) systems, Long Term Evolution Advanced (LTE-A) systems, Universal Mobile Telecommunications System (UMTS), Worldwide Interoperability for Microwave Access (WiMAX) systems, 5G New Radio (NR) systems, etc. These various systems all include terminal devices and network devices. The systems may also include core network parts, such as Evolved Packet System (EPS), 5G System (5GS), etc.

The terminals referred to in the embodiments of the present disclosure, also called terminal devices, may refer to devices providing voice and/or data connectivity to users, handheld devices with wireless connection capabilities, or other processing devices connected to wireless modems. The name of the terminal device may vary in different systems. For example, in a 5G system, the terminal device may be called User Equipment (UE). A wireless terminal device may communicate with one or more core networks via a Radio Access Network (RAN). The wireless terminal device may be a mobile terminal device, such as a mobile phone (or "cellular" phone) and a computer with a mobile terminal device. For example, it may be a portable, pocket-sized, handheld, computer-integrated, or vehicle-mounted mobile device that exchanges voice and/or data with the radio access network. For example, a Personal Communication Service (PCS) phone, a cordless phone, a Session Initiated Protocol (SIP) phone, a Wireless Local Loop (WLL) station, a Personal Digital Assistant (PDA), etc. The wireless terminal device may also be called a system, a subscriber unit, a subscriber station, a mobile station, a mobile, a remote station, an access point, a remote terminal, an access terminal, a user terminal, a user agent, a user device, etc., and is not limited in the embodiments of the present disclosure.

Corresponding to the implementation of the terminal, as shown in FIG. 8, an embodiment of the present disclosure provides an information transmission method, applied to a network device, comprising:
Step S801: Receive first information transmitted by a terminal;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

In some embodiments, the method further comprises:
if the first information is used to instruct the satellite device to release storage space allocated for the terminal upon satisfaction of the first condition, determining that the satellite device releases the storage space upon completion of forwarding of the data of the terminal and the storage space being still valid.

In some embodiments, the method further comprises:
transmitting a first message to the terminal, the first message being used to indicate a configuration update reason, or, the first message being used to instruct the terminal to adjust a data storage duration and/or adjust a data storage capacity.

In some embodiments, the transmitting a first message to the terminal comprises:
upon determining that a second condition is satisfied, transmitting the first message to the terminal, the first message carrying the configuration update reason;
wherein the second condition comprises at least one of the following:
   a forwarding time for the data of the terminal stored thereon has timed out;
   a total amount of the data of the terminal stored thereon exceeds an allocated data storage capacity.

In some embodiments, the method further comprises:
adjusting the data storage duration and/or the data storage capacity according to the first information.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the transmitting a first message to the terminal comprises:
receiving first configuration parameters transmitted by a network node, the first configuration parameters comprising at least one of:
an adjusted data storage duration of the terminal and/or an adjusted data storage capacity;
transmitting the first message to the terminal according to the first configuration parameters, the first message comprising: the adjusted data storage duration of the terminal and/or the adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, if the first message comprises a configuration parameter update notification message, the first information comprises an adjusted data storage duration of the terminal and/or an adjusted data storage capacity.

It should be noted that all descriptions regarding the network device in the above embodiments are applicable to the embodiment of this information processing method and can achieve the same technical effects, which will not be repeated here.

As shown in FIG. 9, an embodiment of the present disclosure provides an information transmission apparatus 900, applied to a terminal, comprising:
a first transmitting unit 901, configured to transmit first information to a network device;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

In some embodiments, the first transmitting unit 901 is configured to:
transmit the first information to the network device via a registration request or a Protocol Data Unit (PDU) session establishment request, the first information being used to instruct the satellite device to release storage space allocated for the terminal upon satisfaction of the first condition.

In some embodiments, the first transmitting unit 901 is configured to:
receive a first message transmitted by the network device, the first message being used to indicate a configuration update reason, or, the first message being used to instruct the terminal to adjust a data storage duration and/or adjust a data storage capacity;
transmit the first information to the network device according to the first message, the first information being used to instruct the satellite device to adjust the data storage duration of the terminal and/or adjust the data storage capacity allocated for the terminal.

In some embodiments, the first transmitting unit 901 is configured to:
if the first message is used to indicate a configuration update reason, transmit the first information to the network device upon determining, based on the configuration update reason, that adjustment of the data storage duration and/or the data storage capacity is needed.

In some embodiments, the first transmitting unit 901 is configured to:
transmit the first information to the network device via a registration update request or a PDU session modification request.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the first message comprises: an adjusted data storage duration and/or an adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, the first transmitting unit 901 is configured to:
if the first message comprises a configuration parameter update notification message, transmit the first information to the network device by executing a registration update procedure or a Protocol Data Unit (PDU) session modification procedure, the first information comprising an adjusted data storage duration and/or an adjusted data storage capacity.

It should be noted that this apparatus embodiment corresponds one-to-one with the above method embodiment. All implementations in the above method embodiment are applicable to this apparatus embodiment and can achieve the same technical effects.

It should be noted that the division of units in the embodiments of the present disclosure is illustrative and is merely a logical function division. In actual implementation, there may be other division methods. Furthermore, various functional units in the embodiments of the present disclosure may be integrated into one processing unit, or each unit may exist physically alone, or two or more units may be integrated into one unit. The integrated units may be implemented in hardware or software functional units.

If the integrated units are implemented as software functional units and sold or used as standalone products, they may be stored in a processor-readable storage medium. Based on this understanding, the essence of the technical solution of the present disclosure or the part contributing to the prior art, or all or part of the technical solution, may be embodied in the form of a software product. The computer software product is stored in a storage medium and includes instructions for causing a computer device (which may be a personal computer, server, network device, etc.) or processor to perform all or part of the steps of the methods described in the various embodiments of the present disclosure. The aforementioned storage medium includes: USB flash drives, mobile hard drives, Read-Only Memory (ROM), Random Access Memory (RAM), magnetic disks, optical disks, and various media capable of storing program code.

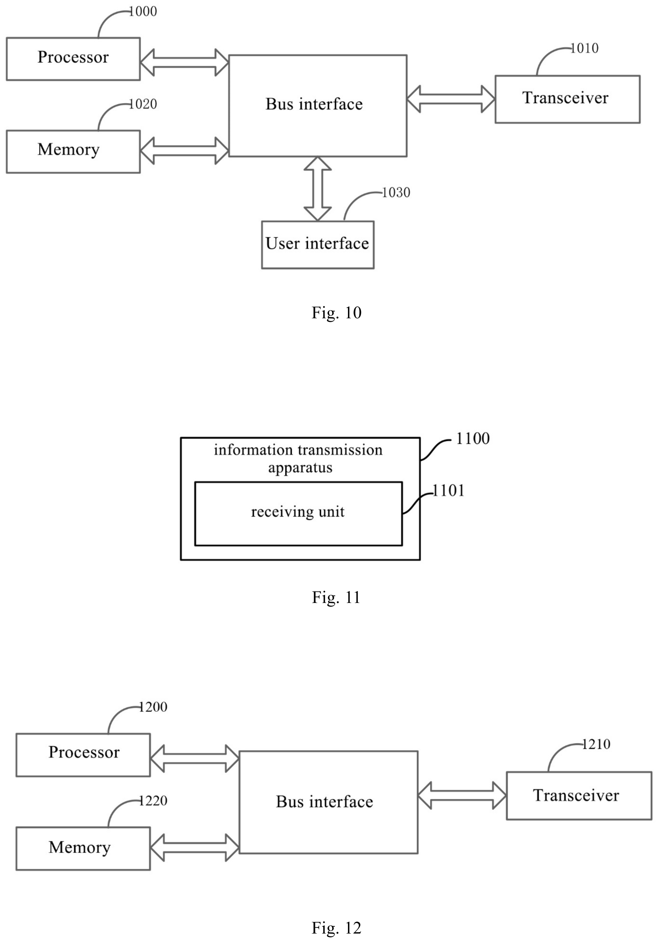

As shown in FIG. 10, an embodiment of the present disclosure further provides a terminal, comprising a processor 1000, a transceiver 1010, a memory 1020, and a program stored on the memory 1020 and executable by the processor 1000; wherein the transceiver 1010 is connected to the processor 1000 and the memory 1020 via a bus interface. The processor 1000 is configured to read the program in the memory and execute the following process:
transmitting first information to a network device via the transceiver 1010;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

The transceiver 1010 is configured to receive and transmit data under the control of the processor 1000.

In FIG. 10, the bus architecture may include any number of interconnected buses and bridges, specifically linking various circuits represented by one or more processors represented by the processor 1000 and memory represented by the memory 1020. The bus architecture may also link various other circuits such as peripherals, voltage regulators, and power management circuits, which are well known in the art and therefore will not be further described herein. The bus interface provides an interface. The transceiver 1010 may be multiple elements, i.e., including a transmitter and a receiver, providing units for communicating with various other apparatuses over transmission media, which include wireless channels, wired channels, optical cables, and other transmission media. For different user equipment, the user interface 1030 may also be an interface capable of externally or internally connecting necessary devices, including but not limited to a keypad, display, speaker, microphone, joystick, etc.

The processor 1000 is responsible for managing the bus architecture and general processing, and the memory 1020 may store data used by the processor 1000 when performing operations.

Optionally, the processor 1000 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor, by calling the computer program stored in the memory, is configured to perform, according to the obtained executable instructions, any method provided in the embodiments of the present disclosure. The processor and the memory may also be physically arranged separately.

In some embodiments, the processor is configured to read the computer program in the memory and execute the following operation:
transmitting the first information to the network device via a registration request or a Protocol Data Unit (PDU) session establishment request, the first information being used to instruct the satellite device to release storage space allocated for the terminal upon satisfaction of the first condition.

In some embodiments, the processor is configured to read the computer program in the memory and execute the following operations:
receiving a first message transmitted by the network device, the first message being used to indicate a configuration update reason, or, the first message being used to instruct the terminal to adjust a data storage duration and/or adjust a data storage capacity;
transmitting the first information to the network device according to the first message, the first information being used to instruct the satellite device to adjust the data storage duration of the terminal and/or adjust the data storage capacity allocated for the terminal.

In some embodiments, the processor is configured to read the computer program in the memory and execute the following operation:
if the first message is used to indicate a configuration update reason, transmitting the first information to the network device upon determining, based on the configuration update reason, that adjustment of the data storage duration and/or the data storage capacity is needed.

In some embodiments, the processor is configured to read the computer program in the memory and execute the following operation:
transmitting the first information to the network device via a registration update request or a PDU session modification request.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the first message comprises: an adjusted data storage duration and/or an adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, the processor is configured to read the computer program in the memory and execute the following operation:
if the first message comprises a configuration parameter update notification message, transmitting the first information to the network device by executing a registration update procedure or a Protocol Data Unit (PDU) session modification procedure, the first information comprising an adjusted data storage duration and/or an adjusted data storage capacity.

At least one embodiment of the present disclosure also provides a terminal comprising a memory, a processor, and a computer program stored on the memory and executable by the processor. The processor executes the program to implement the processes of the information transmission method applied to a terminal in the embodiments and achieve the same technical effects. To avoid repetition, details are not repeated here.

At least one embodiment of the present disclosure also provides a computer-readable storage medium having a computer program stored thereon. The program, when executed by a processor, implements the processes of the information transmission method applied to a terminal in the embodiments and achieves the same technical effects. To avoid repetition, details are not repeated here. The computer-readable storage medium includes, for example, Read-Only Memory (ROM), Random Access Memory (RAM), magnetic disks, optical disks, etc.

As shown in FIG. 11, an embodiment of the present disclosure provides an information transmission apparatus 1100, applied to a network device, comprising:
a receiving unit 1101, configured to receive first information transmitted by a terminal;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

In some embodiments, the apparatus further comprises:
a determining unit, configured to, if the first information is used to instruct the satellite device to release storage space allocated for the terminal upon satisfaction of the first condition, determine that the satellite device releases the storage space upon completion of forwarding of the data of the terminal and the storage space being still valid.

In some embodiments, the apparatus further comprises: a second transmitting unit, configured to transmit a first message to the terminal, the first message being used to indicate a configuration update reason, or, the first message being used to instruct the terminal to adjust a data storage duration and/or adjust a data storage capacity.

Optionally, the second transmitting unit is configured to: upon determining that a second condition is satisfied, transmit the first message to the terminal, the first message carrying the configuration update reason;
wherein the second condition comprises at least one of the following: a forwarding time for the data of the terminal stored thereon has timed out; a total amount of the data of the terminal stored thereon exceeds an allocated data storage capacity.

In some embodiments, the apparatus further comprises: an adjusting unit, configured to adjust the data storage duration and/or the data storage capacity according to the first information.

In some embodiments, the configuration update reason comprises at least one of the following: a forwarding time for the data of the terminal stored thereon has expired; a total amount of the data of the terminal stored thereon exceeds an allocated data storage capacity.

In some embodiments, the second transmitting unit is configured to:
receive first configuration parameters transmitted by a network node, the first configuration parameters comprising at least one of: an adjusted data storage duration of the terminal and/or an adjusted data storage capacity;
transmit the first message to the terminal according to the first configuration parameters, the first message comprising: the adjusted data storage duration of the terminal and/or the adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, if the first message comprises a configuration parameter update notification message, the first information comprises an adjusted data storage duration of the terminal and/or an adjusted data storage capacity.

It should be noted that this apparatus embodiment corresponds one-to-one with the above method embodiment. All implementations in the above method embodiment are applicable to this apparatus embodiment and can achieve the same technical effects.

It should be noted that the division of units in the embodiments of the present disclosure is illustrative and is merely a logical function division. In actual implementation, there may be other division methods. Furthermore, various functional units in the embodiments of the present disclosure may be integrated into one processing unit, or each unit may exist physically alone, or two or more units may be integrated into one unit. The integrated units may be implemented in hardware or software functional units.

If the integrated units are implemented as software functional units and sold or used as standalone products, they may be stored in a processor-readable storage medium. Based on this understanding, the essence of the technical solution of the present disclosure or the part contributing to the prior art, or all or part of the technical solution, may be embodied in the form of a software product. The computer software product is stored in a storage medium and includes instructions for causing a computer device (which may be a personal computer, server, network device, etc.) or processor to perform all or part of the steps of the methods described in the various embodiments of the present disclosure. The aforementioned storage medium includes: USB flash drives, mobile hard drives, Read-Only Memory (ROM), Random Access Memory (RAM), magnetic disks, optical disks, and various media capable of storing program code.

As shown in FIG. 12, an embodiment of the present disclosure further provides a network device, comprising a processor 1200, a transceiver 1210, a memory 1220, and a program stored on the memory 1220 and executable by the processor 1200; wherein the transceiver 1210 is connected to the processor 1200 and the memory 1220 via a bus interface. The processor 1200 is configured to read the program in the memory and execute the following process:
receiving first information transmitted by a terminal via the transceiver 1210;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

The transceiver 1210 is configured to receive and transmit data under the control of the processor 1200.

In FIG. 12, the bus architecture may include any number of interconnected buses and bridges, specifically linking various circuits represented by one or more processors represented by the processor 1200 and memory represented by the memory 1220. The bus architecture may also link various other circuits such as peripherals, voltage regulators, and power management circuits, which are well known in the art and therefore will not be further described herein. The bus interface provides an interface. The transceiver 1210 may be multiple elements, i.e., including a transmitter and a receiver, providing units for communicating with various other apparatuses over transmission media, which include wireless channels, wired channels, optical cables, and other transmission media.

The processor 1200 is responsible for managing the bus architecture and general processing, and the memory 1220 may store data used by the processor 1200 when performing operations.

Optionally, the processor 1200 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor, by calling the computer program stored in the memory, is configured to perform, according to the obtained executable instructions, any method provided in the embodiments of the present disclosure. The processor and the memory may also be physically arranged separately.

In some embodiments, the processor is configured to read the computer program in the memory and further execute the following operation:
if the first information is used to instruct the satellite device to release storage space allocated for the terminal upon satisfaction of the first condition, determining that the satellite device releases the storage space upon completion of forwarding of the data of the terminal and the storage space being still valid.

In some embodiments, the processor is configured to read the computer program in the memory and further execute the following operation:
transmitting a first message to the terminal, the first message being used to indicate a configuration update reason, or, the first message being used to instruct the terminal to adjust a data storage duration and/or adjust a data storage capacity.

In some embodiments, the processor is configured to read the computer program in the memory and execute the following operation:
upon determining that a second condition is satisfied, transmitting the first message to the terminal, the first message carrying the configuration update reason;
wherein the second condition comprises at least one of the following:
   a forwarding time for the data of the terminal stored thereon has timed out;
   a total amount of the data of the terminal stored thereon exceeds an allocated data storage capacity.

In some embodiments, the processor is configured to read the computer program in the memory and further execute the following operation:
adjusting the data storage duration and/or the data storage capacity according to the first information.

In some embodiments, the configuration update reason comprises at least one of the following:
a forwarding time for the data of the terminal stored thereon has expired;
a total amount of the data of the terminal stored thereon exceeds an allocated data storage capacity.

In some embodiments, the processor is configured to read the computer program in the memory and execute the following operations:
receiving first configuration parameters transmitted by a network node, the first configuration parameters comprising at least one of: an adjusted data storage duration of the terminal and/or an adjusted data storage capacity;
transmitting the first message to the terminal according to the first configuration parameters, the first message comprising: the adjusted data storage duration of the terminal and/or the adjusted data storage capacity.

In some embodiments, the first message comprises at least one of the following messages:
a configuration parameter adjustment notification message;
a configuration parameter update notification message, the configuration parameter update notification message being used to instruct the terminal to execute a configuration parameter update procedure.

In some embodiments, if the first message comprises a configuration parameter update notification message, the first information comprises an adjusted data storage duration of the terminal and/or an adjusted data storage capacity.

It should be noted here that the network device provided in the above embodiments of the present disclosure can implement all method steps implemented in the method embodiments and achieve the same technical effects. Details and beneficial effects of parts identical to the method embodiments are not specifically repeated here.

An embodiment of the present disclosure further provides a computer-readable storage medium having a computer program stored thereon, wherein the computer program, when executed by a processor, implements the steps of the information transmission method applied to a network device. The processor-readable storage medium may be any available medium or data storage device accessible by a processor, including but not limited to magnetic memory (e.g., floppy disks, hard disks, magnetic tapes, Magneto-Optical Disks (MOs), etc.), optical memory (e.g., Compact Disks (CDs), Digital Versatile Discs (DVDs), Blu-ray Discs (BDs), High-Definition Versatile Discs (HVDs), etc.), and semiconductor memory (e.g., Read-Only Memory (ROM), Erasable Programmable Read-Only Memory (EPROM), Electrically Erasable Programmable Read-Only Memory (EEPROM), non-volatile memory (NAND FLASH), Solid State Drives (SSDs), etc.).

Those skilled in the art will appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to disk storage and optical storage, etc.) having computer-usable program code embodied therein.

The present disclosure is described with reference to flowchart illustrations and/or block diagrams of methods, apparatus (systems), and computer program products according to embodiments of the present disclosure. It will be understood that each flow and/or block of the flowchart illustrations and/or block diagrams, and combinations of flows and/or blocks in the flowchart illustrations and/or block diagrams, can be implemented by computer-executable instructions. These computer-executable instructions may be provided to a processor of a general-purpose computer, special-purpose computer, embedded processor, or other programmable data processing apparatus to produce a machine, such that the instructions, which execute via the processor of the computer or other programmable data processing apparatus, create means for implementing the functions specified in one or more flows of the flowchart and/or one or more blocks of the block diagram.

These processor-executable instructions may also be stored in a processor-readable memory that can direct a computer or other programmable data processing apparatus to function in a particular manner, such that the instructions stored in the processor-readable memory produce an article of manufacture including instruction means which implement the function specified in one or more flows of the flowchart and/or one or more blocks of the block diagram.

These processor-executable instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in one or more flows of the flowchart and/or one or more blocks of the block diagram.

It should be noted that the above division of each module is merely a logical function division, and in actual implementation may be fully or partially integrated into a single physical entity or may be physically separate. These modules may be implemented entirely in software called by processing elements; or entirely in hardware; or partially in software called by processing elements and partially in hardware. For example, a determining module may be a separately established processing element, or may be integrated into a chip of the aforementioned apparatus. Alternatively, it may be stored in the memory of the aforementioned apparatus in the form of program code and called and executed by a processing element of the aforementioned apparatus to implement the function of the determining module. The implementation of other modules is similar. Moreover, all or part of these modules may be integrated together or implemented independently.

For example, each module, unit, sub-unit, or sub-module may be one or more integrated circuits configured to implement the above method, such as one or more Application Specific Integrated Circuits (ASICs), one or more Digital Signal Processors (DSPs), or one or more Field Programmable Gate Arrays (FPGAs). As another example, when a module is implemented in the form of program code called by a processing element, the processing element may be a general-purpose processor, such as a Central Processing Unit (CPU) or another processor capable of calling program code. As another example, these modules may be integrated together and implemented as a System-on-a-Chip (SOC).

The terms "first," "second," etc., in the specification and claims of the present disclosure are used to distinguish similar objects and do not necessarily imply a specific order or sequence. It should be understood that such data may be interchanged where appropriate so that the embodiments of the present disclosure described herein can be implemented in sequences other than those illustrated or described herein.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalents, the present disclosure is also intended to encompass these modifications and variations.

## Claims

1. An information transmission method, performed by a terminal, comprising:
transmitting first information to a network device;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

2. The method according to claim 1, wherein the transmitting first information to a network device comprises:
transmitting the first information to the network device via a registration request or a Protocol Data Unit (PDU) session establishment request, the first information being used to instruct the satellite device to release storage space allocated for the terminal upon satisfaction of the first condition.

3. The method according to claim 1, wherein the transmitting first information to a network device comprises:
receiving a first message transmitted by the network device, the first message being used to indicate a configuration update reason, or, the first message being used to instruct the terminal to adjust a data storage duration and/or adjust a data storage capacity;
transmitting the first information to the network device according to the first message, the first information being used to instruct the satellite device to adjust the data storage duration of the terminal and/or adjust the data storage capacity allocated for the terminal.

4. The method according to claim 3, wherein the transmitting first information to a network device comprises:
if the first message is used to indicate a configuration update reason, transmitting the first information to the network device upon determining, based on the configuration update reason, that adjustment of the data storage duration and/or the data storage capacity is needed.

5. The method according to claim 4, wherein the transmitting the first information to the network device comprises:
transmitting the first information to the network device via a registration update request or a PDU session modification request.

6. The method according to any one of claims 3 to 5, wherein the configuration update reason comprises at least one of the following:
a forwarding time for the data of the terminal stored thereon has expired;
a total amount of the data of the terminal stored thereon exceeds an allocated data storage capacity.

7. The method according to claim 3, wherein the first message comprises: an adjusted data storage duration and/or an adjusted data storage capacity.

8. The method according to claim 7, wherein the first message comprises at least one of the following messages:
a configuration parameter adjustment notification message;
a configuration parameter update notification message, the configuration parameter update notification message being used to instruct the terminal to execute a configuration parameter update procedure.

9. The method according to claim 8, wherein the transmitting first information to a network device comprises:
if the first message comprises a configuration parameter update notification message, transmitting the first information to the network device by executing a registration update procedure or a PDU session modification procedure, the first information comprising an adjusted data storage duration and/or an adjusted data storage capacity.

10. An information transmission method, performed by a network device, comprising:
receiving first information transmitted by a terminal;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

11. The method according to claim 10, further comprising:
if the first information is used to instruct the satellite device to release storage space allocated for the terminal upon satisfaction of the first condition, determining that the satellite device releases the storage space upon completion of forwarding of the data of the terminal and the storage space being still valid.

12. The method according to claim 10, further comprising:
transmitting a first message to the terminal, the first message being used to indicate a configuration update reason, or, the first message being used to instruct the terminal to adjust a data storage duration and/or adjust a data storage capacity.

13. The method according to claim 12, wherein the transmitting a first message to the terminal comprises:
upon determining that a second condition is satisfied, transmitting the first message to the terminal, the first message carrying the configuration update reason;
wherein the second condition comprises at least one of the following:
a forwarding time for the data of the terminal stored thereon has timed out;
a total amount of the data of the terminal stored thereon exceeds an allocated data storage capacity.

14. The method according to claim 13, further comprising:
adjusting the data storage duration and/or the data storage capacity according to the first information.

15. The method according to any one of claims 12 to 14, wherein the configuration update reason comprises at least one of the following:
a forwarding time for the data of the terminal stored thereon has expired;
a total amount of the data of the terminal stored thereon exceeds an allocated data storage capacity.

16. The method according to claim 12, wherein the transmitting a first message to the terminal comprises:
receiving first configuration parameters transmitted by a network node, the first configuration parameters comprising at least one of: an adjusted data storage duration of the terminal and/or an adjusted data storage capacity;
transmitting the first message to the terminal according to the first configuration parameters, the first message comprising: the adjusted data storage duration of the terminal and/or the adjusted data storage capacity.

17. The method according to claim 16, wherein the first message comprises at least one of the following messages:
a configuration parameter adjustment notification message;
a configuration parameter update notification message, the configuration parameter update notification message being used to instruct the terminal to execute a configuration parameter update procedure.

18. The method according to claim 17, wherein if the first message comprises a configuration parameter update notification message, the first information comprises an adjusted data storage duration of the terminal and/or an adjusted data storage capacity.

19. A terminal, comprising a memory, a transceiver, and a processor:
the memory is configured to store a computer program; the transceiver is configured to transmit and receive data under control of the processor; the processor is configured to read the computer program in the memory and execute the following operation:
transmitting first information to a network device via the transceiver;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

20. The terminal according to claim 19, wherein the processor is configured to read the computer program in the memory and execute the following operation:
transmitting the first information to the network device via a registration request or a PDU session establishment request, the first information being used to instruct the satellite device to release storage space allocated for the terminal upon satisfaction of the first condition.

21. The terminal according to claim 19, wherein the processor is configured to read the computer program in the memory and execute the following operations:
receiving a first message transmitted by the network device, the first message being used to indicate a configuration update reason, or, the first message being used to instruct the terminal to adjust a data storage duration and/or adjust a data storage capacity;
transmitting the first information to the network device according to the first message, the first information being used to instruct the satellite device to adjust the data storage duration of the terminal and/or adjust the data storage capacity allocated for the terminal.

22. The terminal according to claim 21, wherein the processor is configured to read the computer program in the memory and execute the following operation:
if the first message is used to indicate a configuration update reason, transmitting the first information to the network device upon determining, based on the configuration update reason, that adjustment of the data storage duration and/or the data storage capacity is needed.

23. The terminal according to claim 22, wherein the processor is configured to read the computer program in the memory and execute the following operation:
transmitting the first information to the network device via a registration update request or a PDU session modification request.

24. The terminal according to any one of claims 21 to 23, wherein the configuration update reason comprises at least one of the following:
a forwarding time for the data of the terminal stored thereon has expired;
a total amount of the data of the terminal stored thereon exceeds an allocated data storage capacity.

25. The terminal according to claim 21, wherein the first message comprises: an adjusted data storage duration and/or an adjusted data storage capacity.

26. The terminal according to claim 25, wherein the first message comprises at least one of the following messages:
a configuration parameter adjustment notification message;
a configuration parameter update notification message, the configuration parameter update notification message being used to instruct the terminal to execute a configuration parameter update procedure.

27. The terminal according to claim 26, wherein the processor is configured to read the computer program in the memory and execute the following operation:
if the first message comprises a configuration parameter update notification message, transmitting the first information to the network device by executing a registration update procedure or a PDU session modification procedure, the first information comprising an adjusted data storage duration and/or an adjusted data storage capacity.

28. A network device, comprising a memory, a transceiver, and a processor:
the memory is configured to store a computer program; the transceiver is configured to transmit and receive data under control of the processor; the processor is configured to read the computer program in the memory and execute the following operation:
receiving first information transmitted by a terminal via the transceiver;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

29. An information transmission apparatus, applied to a terminal, comprising:
a first transmitting unit, configured to transmit first information to a network device;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

30. The apparatus according to claim 29, wherein the first transmitting unit is configured to:
transmit the first information to the network device via a registration request or a PDU session establishment request, the first information being used to instruct the satellite device to release storage space allocated for the terminal upon satisfaction of the first condition.

31. The apparatus according to claim 29, wherein the first transmitting unit is configured to:
receive a first message transmitted by the network device, the first message being used to indicate a configuration update reason, or, the first message being used to instruct the terminal to adjust a data storage duration and/or adjust a data storage capacity;
transmit the first information to the network device according to the first message, the first information being used to instruct the satellite device to adjust the data storage duration of the terminal and/or adjust the data storage capacity allocated for the terminal.

32. An information transmission apparatus, applied to a network device, comprising:
a receiving unit, configured to receive first information transmitted by a terminal;
wherein the first information is used to instruct a satellite device to release storage space allocated for the terminal upon satisfaction of a first condition, the first condition comprising completion of forwarding of data of the terminal stored thereon; or,
the first information is used to instruct the satellite device to adjust a data storage duration of the terminal and/or adjust data storage capacity allocated by the satellite device for the terminal.

33. A processor-readable storage medium, storing a computer program, the computer program being configured to cause a processor to execute the method according to any one of claims 1 to 18.
